# EUROPÄISCHE PATENTSCHRIFT

(11) **EP 1 573 883 B1**
(45) Veröffentlichungstag und Bekanntmachung des Hinweises auf die Patenterteilung: **27.09.2006**
(21) Anmeldenummer: 03782127.9
(22) Anmeldetag: 05.12.2003
(51) Int. Cl.: H02K 3/34

(54) **EXTRUDIERTE ELASTISCHE ISOLIERUNG FÜR LEITER VON ELEKTRISCHEN MASCHINEN**
EXTRUDED ELASTIC INSULATION FOR CONDUCTORS OF ELECTRIC MACHINES
ELEMENT D'ISOLEMENT ELASTIQUE EXTRUDE DE CONDUCTEURS DE MACHINES ELECTRIQUES

(30) Priorität: 20.12.2002 DE 10260315
(43) Veröffentlichungstag der Anmeldung: 14.09.2005
(73) Patentinhaber: SIEMENS AKTIENGESELLSCHAFT, 80333 München (DE)
(72) Erfinder: SCHÄFER, Klaus, 90455 Nürnberg (DE); MAUL, Gerhard, 90411 Nürnberg (DE); KAUFHOLD, Martin, 90419 Nürnberg (DE)
(86) Internationale Anmeldenummer: PCT/DE2003/004004
(87) Internationale Veröffentlichungsnummer: WO 2004/059819

(56) Entgegenhaltungen:
- EP-A- 0 951 132
- WO-A-00/60721
- US-A- 2 570 786
- US-A- 5 650 031
- US-A1- 2002 053 461

## Beschreibung

Die vorliegende Erfindung betrifft einen Litzenleiter zur Bildung eines elektrischen Leiters, insbesondere eines Teilleiters, für eine Wicklung einer elektrischen Maschine mit einer Anordnung von mehreren, untereinander im Wesentlichen parallelen und/oder verdrillten Filamenten und einer Isolation, die die Anordnung von Filamenten an ihrem Außenumfang umgibt. Ferner betrifft die vorliegende Erfindung ein entsprechendes Verfahren zur Herstellung von elektrischen Leitern für elektrische Maschinen.

Für elektrische Maschinen werden Wicklungen unter anderem aus Formspulen verwendet, die vorrangig aus Rechteckleitern hergestellt werden. Für das Rechteckkupfer wurden bisher in der Regel massive Leiter eingesetzt. Alternativ ist auch der Einsatz von blanken oder isolierten Litzen aus Kupfer oder Aluminium, die zu Rechteckprofilen gewalzt werden, möglich.

Die Isolierung von massiven Rechteckdrähten erfolgt in der Regel durch Lackieren, Extrudieren oder Umspinnen mit Isolierbändern (Folien, Glimmer, Papier, Glas- oder Kunstgarne) oder Kombinationen aus diesen. Eine derartige Isolierung wird Teilleiter- oder Leiterisolierung genannt. Zusätzlich muss für die elektrische Isolierung der Leiter gegen das Massepotential, d. h. gegen das Blechpaket des Stators oder Rotors, noch eine Hauptisolierung um die Teilleiter aufgebracht werden. Die Hauptisolierung besteht üblicherweise aus mehrschichtig aufgebrachten Isolierbändern (Glimmerbänder, Breitbahnmaterialien mit unterschiedlichen Trägern) oder für Wicklungen mit niedrigen Nennspannungen aus einer auch mehrschichtig möglichen Nutauskleidung aus beispielsweise aromatischem Polyamid, Folien oder Glimmer. Die gesamte Wicklung wird mit einem geeigneten Imprägniermittel mittels Tauch- oder VPI-Verfahren imprägniert.

Bei Hochspannungs-Wicklungen wird bei elektrischen Maschinen die Teilleiterisolierung, d. h. die Isolierung zwischen Teilleitern und zwischen Windungen, und die Hauptisolierung, d. h. die Isolierung gegen Erde und zwischen den Strängen im Nut- und Stirnseitenbereich, der Wicklung in der Regel aus Feinglimmerbändern mit Glasgewebe- und/oder Folienträgern hergestellt. Als äußere Lage wird im Nutbereich ein leitfähiger Außenglimmschutz und gegebenenfalls ein Endenglimmschutz zur Potentialsteuerung eingesetzt. Im Wickelkopf wird ein Deckband mit glatter, verschmutzungsunempfindlicher Oberfläche verwendet. Die Dicke der Hauptisolierung ist sowohl der Nennspannung der Maschine als auch den Betriebs- und Fertigungsbedingungen angepasst.

Bei Niederspannungs-Formspulenwicklungen besteht die Teilleiterisolierung beispielsweise aus organischen Lacken und abhängig von den Anforderungen aus einer zusätzlichen Umspinnung mit Folien oder Glasfilamenten. Die Hauptisolierung im Nutbereich wird beispielsweise mit Mehrschicht-Flächenisolierstoffen aus aromatischem Polyamidpapier und Folien und/oder Micafolium (Glimmer-Flächenstoff) realisiert. Die Phasenisolierung wird durch Luftstrecken im Wickelkopf oder durch Isolierstoffe im Nutbereich gebildet.

Die Isolierung der verschiedenen Wicklungen ist sehr zeit- und kostenintensiv.

Gattungsgemäße Wicklungen für elektrische Maschinen sind aus der Druckschrift WO 00/60721 bekannt. Für den Litzenleiter werden vorisolierte Filamente verwendet. Alternativ können die Filamente des Litzenleiters auch mit einem Harz nachträglich imprägniert werden. Um die Litze wird eine Teilleiterisolierung durch Extrusion aufgebracht. Am Außenumfang wird der Teilleiter schließlich mit einem Entladungsschutz umgeben.

Aus den Druckschriften US 2 570 786 und EP 0 951 132 A2 sind ebenfalls Hochspannungswicklungen für elektrische Maschinen bekannt, die durch Extrusion isoliert sind. Aus den weiteren Druckschriften US 2002/0053461 A1 und US 5 650 031 ist bekannt, mehrschichtige Isolierungen für Wicklungen durch KoExtrusion aufzubringen.

Die Aufgabe der vorliegenden Erfindung besteht somit darin, eine einfach herzustellende Isolierung für Wicklungen von elektrischen Maschinen bereitzustellen.

Erfindungsgemäß wird diese Aufgabe gelöst durch einen Litzenleiter zur Bildung eines elektrischen Leiters, insbesondere eines Teilleiters, für eine Wicklung einer elektrischen Maschine mit einer Anordnung von mehreren, untereinander parallelen und/oder verdrillten Filamenten und einer Isolation, die die Anordnung von Filamenten an ihrem Außenumfang umgibt, wobei die Isolation durch Extrusion um die Anordnung der Filamente aufgebracht ist und wobei eine elastische, extrudierte Füllung aus einem von der Isolation abweichenden Material zwischen die Filamente eingebracht ist.

Ferner ist erfindungsgemäß vorgesehen ein Verfahren zur Herstellung von elektrischen Leitern, insbesondere von Teilleitern für eine Wicklung einer elektrischen Maschine durch Anordnen mehrerer Filamente parallel und/oder verdrillt zueinander unter Bildung eines Litzenleiters und Isolieren des Litzenleiters an dessen Außenumfang, wobei das Isolieren durch Extrusion erfolgt und wobei der Hohlraum zwischen den Filamenten mit einer elastischen, extrudierten Füllung aus einem von der Isolation abweichenden Material gefüllt wird.

In vorteilhafter Weise ergibt sich aus der extrudierten Umhüllung eine höhere Formstabilität des Litzenleiters. Darüber hinaus kann durch die Extrusion eine sehr dichte Isolierung für spezielle Einsatzzwecke von Wicklungen, z.B. in nassen Umgebungen oder unter Wasser, ermöglicht werden.

Mittels Extrusion können auf beliebig geformte Litzenleiter Kunststoffisolierungen aufgebracht werden. Sehr vorteilhaft ist dies auch für Teilleiter mit rechteckförmigem Querschnitt. Somit kann der aufwändige Isolierungsprozess für die Teilleiter deutlich einfacher gestaltet werden.

Es ist ferner möglich, beim Aufbringen der Isolierschicht durch Extrusion unterschiedliche Wandstärken der Isolierung herzustellen. Dadurch können beispielsweise Teilleiter hergestellt werden, deren Isolation zumindest an Teilen des Umfangs die Anforderung an eine Hauptisolation erfüllt. Durch die Kombination der Teilleiterisolierung und der Hauptisolierung kann der Herstellungsprozess für elektrische Maschinen weiter vereinfacht werden.

Durch die Extrusion kann nicht nur eine Kunststoffisolierschicht am Außenumfang eines Litzenleiters aufgebracht werden, sondern es können auch die Hohlräume innerhalb des Litzenleiters mit einem wärmeleitfähigen elastischen Extrusionswerkstoff gefüllt werden. So kann ein verbesserter Wärmetransfer zwischen den Einzelleitern der Litze erzielt werden.

Um die Stabilität der Litze in einem gewissen Rahmen zu beeinflussen, kann das durch Extrusion aufgebrachte Isoliermaterial auch teilweise in die Zwischenräume zwischen den Litzen eingepresst werden.

Auch dem Isoliermaterial für die Außenisolierung der Litze können Substanzen zur Steigerung der Wärmeleitfähigkeit hinzugefügt werden. Dadurch kann die Verlustwärme besser aus den Leitern beispielsweise in das Blechpaket oder die Umgebungsluft abgeführt werden.

Die vorliegende Erfindung wird nun anhand der beigefügten Zeichnungen näher erläutert, in denen zeigen:
- FIG 1: einen Querschnitt durch einen erfindungsgemäß isolierten Teilleiter;
- FIG 2: einen vergrößerten Ausschnitt des Innenbereichs des Teilleiters gemäß FIG 1; und
- FIG 3: eine Querschnitt durch einen Teilleiter gemäß einer weiteren Ausführungsform der vorliegenden Erfindung.

Die nachfolgenden Ausführungsbeispiele stellen bevorzugte Ausführungsformen der vorliegenden Erfindung dar.

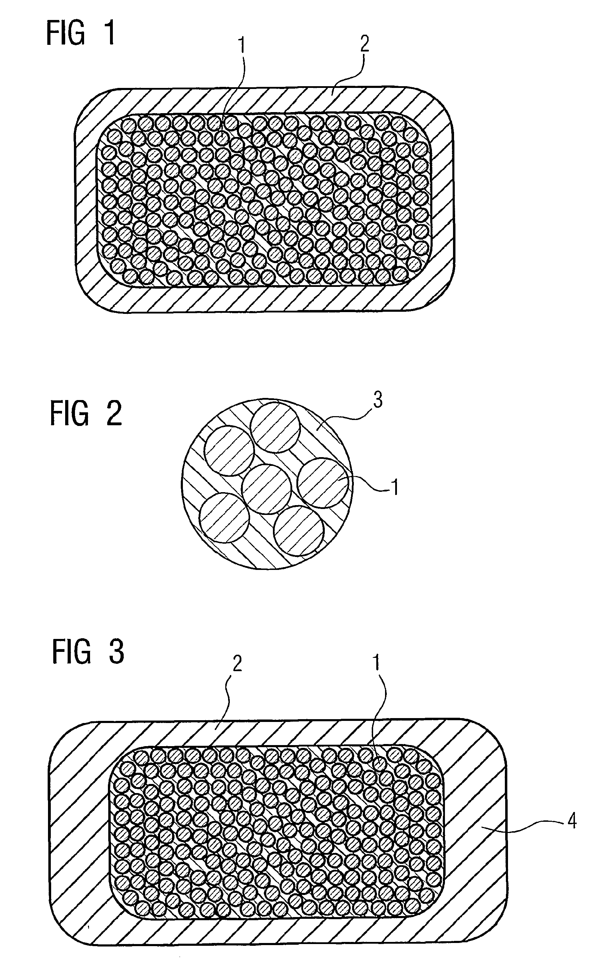

In FIG 1 ist der Querschnitt durch einen Teilleiter aus Litze dargestellt. Der Leiterbereich besteht aus einer Vielzahl von Filamenten 1 und ist zu einer rechteckförmigen Gestalt gewalzt.

Der Leiterbereich ist von einer extrudierten Teilleiterisolierung 2 umgeben.

Die Zwischenräume zwischen den Einzelleitern beziehungsweise Filamenten 1 der Litze sind ebenfalls durch Extrusion mit einem Kunststoff gefüllt. FIG 2 zeigt hierzu einen Ausschnitt aus dem Leiterbereich von FIG 1.

Die Teilleiterisolierung 2 auf dem Rechteckleiter aus Flachlitze (Pressseil) wird vorzugsweise aus einem Hochtemperaturthermoplast gebildet. Hinsichtlich der Isolierwerkstoffe und insbesondere der Hochtemperaturthermoplaste wird explizit auf die Patentanmeldung 197 48 529 der Anmelderin verwiesen. Durch einen ein- oder mehrstufigen Extrusionsprozess (Coextrusion) können mögliche Hohlräume zwischen den Litzendrähten gefüllt werden und so eine Stabilisierung und Verdichtung des Leiters bei gleichzeitigem Erhalt einer hohen Flexibilität durch eine elastische Werkstoffcharakteristik erreicht werden. Die umhüllende Teilleiterisolierung 2 wird hingegen aus einem ebenfalls elastischen, aber härtenden Werkstoff gebildet.

Die Füllung 3 zwischen den Litzendrähten des Rechteckleiters besteht darüber hinaus aus einem thermisch leitfähigen Material. Dadurch wird die bei Standardlitzenleitern ungünstige Wärmeabfuhr verbessert und eine höhere Leistungsdichte der Maschine erreicht.

Das Füllmaterial kann ferner eine geringe elektrische Leitfähigkeit besitzen, so dass ein gewisser Potentialausgleich zwischen den einzelnen Filamenten 1 des Rechteckleiters stattfindet. Damit können die Maximalfeldstärken insbesondere an den Kanten des Rechteckleiters vermindert werden. Zur Gewährleistung eines Außenglimmschutzes kann die äußere Schicht der extrudierten Teilleiter- oder Hauptisolierung durch Coextrusion ebenfalls leitend gestaltet werden. Durch die äußere leitfähige, durch Coextrusion aufgebrachte Schicht kann auf den Endenglimmschutz verzichtet werden.

Ein weiteres Ausführungsbeispiel der vorliegenden Erfindung ist in FIG 3 skizziert. Die Wandstärke der Isolierung ist im Bereich der Schmalseiten des Rechteckleiters gegenüber der Ausführungsform von FIG 1 erhöht. Die Wandstärke der Isolierung 2 im Bereich der Längsseiten des Rechteckleiters entspricht dagegen der Teilleiterisolierung der Ausführungsform von FIG 1. Die verstärkte Isolierung 4 erfüllt die Anforderungen an eine Hauptisolierung. Damit ist es möglich, in einem Extrusionsschritt sowohl die Teilleiterisolierung 2 als auch die Hauptisolierung 4 herzustellen. Mehrere derartige, recheckförmige Teilleiter können nun übereinander in die Nut eines Blechpakets einer elektrischen Maschine eingelegt werden. Hierzu ist lediglich am Nutgrund eine weitere Isolierung vorzusehen, da der unterste Teilleiter mit seiner Längsseite, die lediglich die Teilleiterisolierung 2 trägt, auf dem Nutgrund aufliegt. Durch die integrierbare Hauptisolierung 4 können Wicklungen mit verhältnismäßig niedriger Nennspannung ohne explizite Hauptisolierung in einem einfachen Prozess hergestellt werden. Insgesamt sind so durch die Kombination des Litzenleiters mit einer extrudierbaren Isolierung besondere Vorteile für die Herstellung und die Dimensionierung der elektrischen Maschine gegeben.

## Patentansprüche

1. Litzenleiter zur Bildung eines elektrischen Leiters, insbesondere eines Teilleiters, für eine Wicklung einer elektrischen Maschine mit
- einer Anordnung von mehreren, untereinander parallelen und/oder verdrillten Filamenten (1) und
- einer Isolation (2), die die Anordnung von Filamenten (1) an ihrem Außenumfang umgibt, und die durch Extrusion um die Anordnung der Filamente (1) aufgebracht ist,
**dadurch gekennzeichnet, dass**
eine elastische, extrudierte Füllung (3) aus einem von der Isolation (2) abweichenden Material zwischen die Filamente (1) eingebracht ist.

2. Litzenleiter nach Anspruch 1, der rechteckförmig ausgestaltet ist.

3. Litzenleiter nach Anspruch 1 oder 2, wobei die elastische, extrudierte Füllung (3) eine vorgegebene elektrische Leitfähigkeit besitzt.

4. Litzenleiter nach einem der Ansprüche 1 bis 3, wobei die durch Extrusion aufgebrachte Isolation (2) teilweise Zwischenräume zwischen den mehreren Filamenten (1) füllt.

5. Litzenleiter nach einem der Ansprüche 1 bis 4, wobei in die Isolation (2) und/oder die Füllung (3) mindestens eine Substanz zur Steigerung der Wärmeleitfähigkeit eingebracht ist.

6. Litzenleiter nach einem der Ansprüche 1 bis 5, wobei eine äußere coextrudierte leitfähige Schicht einen Außenglimmschutz darstellt, so dass auf einen Endenglimmschutz verzichtet werden kann.

7. Wicklung für eine elektrische Maschine, die für eine vorgegebene maximale Betriebsspannung ausgelegt ist, mit mehreren Litzenleitern nach einem der Ansprüche 1 bis 6, wobei die Isolation (2) die Anforderungen an eine Teilleiterisolation erfüllt.

8. Wicklung nach Anspruch 7, wobei die Isolation (2) zumindest an Teilen des Außenumfangs um die Anordnung von Filamenten (1) die Anforderungen an eine Hauptisolation erfüllt.

9. Verfahren zur Herstellung von elektrischen Leitern, insbesondere von Teilleitern für eine Wicklung einer elektrischen Maschine durch
- Anordnen mehrerer Filamente (1) parallel zueinander und/oder verdrillt unter Bildung eines Litzenleiters und
- Isolieren des Litzenleiters an dessen Außenumfang durch Extrusion,
**dadurch gekennzeichnet, dass**
der Hohlraum zwischen den Filamenten (1) mit einer elastischen, extrudierten Füllung aus einem von der Isolation (2) abweichenden Material gefüllt wird.

10. Verfahren nach Anspruch 9, wobei der Litzenleiter im Querschnitt rechteckförmig gestaltet wird.

11. Verfahren nach Anspruch 9 oder 10, wobei bei der Extrusion die Zwischenräume zwischen den Filamenten (1) teilweise mit der aufzubringenden Isolation gefüllt werden.

12. Verfahren nach einem der Ansprüche 9 bis 11, wobei in die Isolation (2) und/oder die Füllung (3) mindestens eine Substanz zur Steigerung der Wärmeleitfähigkeit eingebracht wird.

13. Verfahren nach einem der Ansprüche 9 bis 12, wobei durch Coextrusion eine äußere leitfähige Schicht als Außenglimmschutz hergestellt wird, so dass auf einen Endenglimmschutz verzichtet werden kann.

## Claims

1. Stranded conductor for forming an electrical conductor, in particular a subconductor, for a winding of an electrical machine having
- an arrangement of a plurality of mutually parallel and/or twisted filaments (1) and
- an insulation (2) which surrounds the exterior circumference of the arrangement of filaments (1) and which is applied around the arrangement of the filaments (1) by extrusion,
**characterised in that**
an elastic extruded filling material (3) which is made of a material different from that of the insulation (2) is introduced between the filaments (1).

2. Stranded conductor according to claim 1, said stranded conductor having a rectangular shape.

3. Stranded conductor according to claim 1 or 2, wherein the elastic extruded filling material (3) possesses a predetermined electrical conductivity.

4. Stranded conductor according to one of the claims 1 to 3, wherein the insulation (2) applied by extrusion partially fills interstices between the plurality of filaments (1).

5. Stranded conductor according to one of the claims 1 to 4, wherein at least one substance for increasing the thermal conductivity is introduced into the insulation (2) and/or the filling material (3).

6. Stranded conductor according to one of the claims 1 to 5, wherein an outer co-extruded conductive layer represents an exterior corona shielding, with the result that corona shielding at the ends can be dispensed with.

7. Winding for an electrical machine which is designed for a predetermined maximum operating voltage, having a plurality of stranded conductors according to one of the claims 1 to 6, wherein the insulation (2) satisfies the requirements for a subconductor insulation.

8. Winding according to claim 7, wherein the insulation (2) satisfies the requirements for a subconductor insulation at least on parts of the exterior circumference around the arrangement of filaments (1).

9. Method for producing electrical conductors, in particular subconductors for a winding of an electrical machine by
- arranging a plurality of filaments (1) parallel to one another and/or twisted together to form a stranded conductor and
- insulating the stranded conductor on its exterior circumference by extrusion,
**characterised in that**
the cavity between the filaments (1) is filled with an elastic extruded filling material made of a material which is different from the insulation (2).

10. Method according to claim 9, wherein the stranded conductor has a rectangular shape in cross-section.

11. Method according to claim 9 or 10, wherein during the extrusion the interstices between the filaments (1) are partially filled with the insulation that is to be applied.

12. Method according to one of the claims 9 to 11, wherein at least one substance for increasing the thermal conductivity is introduced into the insulation (2) and/or the filling material (3).

13. Method according to one of the claims 9 to 12, wherein an outer conducting layer is produced as an exterior corona shielding by co-extrusion, with the result that corona shielding at the ends can be dispensed with.

## Revendications

1. Conducteur multibrins pour former un conducteur électrique, en particulier un sous-conducteur, d' un enroulement d'une machine électrique, comportant
- un système à plusieurs filaments (1) parallèles les uns aux autres et/ou torsadés et
- un isolement (2) qui entoure le système de filaments (1) sur son pourtour extérieur et est appliqué par extrusion autour du système de filaments (1), **caractérisé en ce qu'**une charge (3) élastique extrudée en un matériau différent de celui de l'isolement (2) est introduite entre les filaments (1).

2. Conducteur multibrins selon la revendication 1, dont la forme est rectangulaire.

3. Conducteur multibrins selon la revendication 1 ou 2, dans lequel la charge (3) élastique extrudée a une conductibilité électrique donnée à l'avance.

4. Conducteur multibrins selon l'une des revendications 1 à 3, dans lequel l'isolement (2) appliqué par extrusion remplit en partie des espaces intermédiaires entre les multiples filaments (1).

5. Conducteur multibrins selon l'une des revendications 1 à 4, dans lequel au moins une substance destinée à augmenter la conductivité thermique est introduite dans l'isolement (2) et/ou la charge (3).

6. Conducteur multibrins selon l'une des revendications 1 à 5, dans lequel une couche conductrice extérieure coextrudée représente un dispositif extérieur antieffluves, de sorte qu'on peut se passer d'un dispositif terminal antieffluves.

7. Enroulement pour une machine électrique conçue pour une tension maximale prédéfinie de fonctionnement, comportant plusieurs conducteurs multibrins selon l'une des revendications 1 à 6, l'isolement (2) satisfaisant aux exigences d'un isolement des sous-conducteurs élémentaires.

8. Enroulement selon la revendication 7, dans lequel l'isolement (2) satisfait aux exigences d'un isolement principal au moins sur des parties du pourtour extérieur situées autour du système de filaments (1).

9. Procédé pour fabriquer des conducteurs électriques, en particulier des sous-conducteurs d' un enroulement d'une machine électrique,
- en disposant plusieurs filaments (1) parallèlement les uns aux autres et/ou torsadés pour former un conducteur multibrins et
- en isolant par extrusion le conducteur multibrins sur son pourtour extérieur,
**caractérisé en ce que** l'on remplit l'espace vide entre les filaments (1) d'une charge élastique extrudée en un matériau différent de celui de l'isolement (2).

10. Procédé selon la revendication 9, d'après lequel le conducteur multibrins a une section transversale rectangulaire.

11. Procédé selon la revendication 9 ou 10, d'après lequel, lors de l'extrusion, les espaces intermédiaires entre les filaments (1) sont en partie remplis par l'isolement à appliquer.

12. Procédé selon l'une des revendications 9 à 11, d'après lequel au moins une substance destinée à augmenter la conductivité thermique est introduite dans l'isolement (2) et/ou la charge (3).

13. Procédé selon l'une des revendications 9 à 12, d'après lequel une couche conductrice extérieure coextrudée servant de dispositif extérieur antieffluves est fabriquée par coextrusion, de sorte qu'on peut se passer d'un dispositif terminal antieffluves.
